# EUROPÄISCHE PATENTSCHRIFT

(11) **EP 2 033 837 B1**
(45) Veröffentlichungstag und Bekanntmachung des Hinweises auf die Patenterteilung: **08.01.2020**
(21) Anmeldenummer: 08013505.6
(22) Anmeldetag: 26.07.2008
(51) Int. Cl.: B60L 3/00, B60L 58/18, B60L 58/30

(54) **Wasserfahrzeug mit einer Mehrzahl von Energiespeichern**
Water vehicle with various energy stores
Véhicule aquatique doté d'une multitude de dispositifs de stockage d'énergie

(30) Priorität: 31.08.2007 DE 102007041396
(43) Veröffentlichungstag der Anmeldung: 11.03.2009
(73) Patentinhaber: thyssenkrupp Marine Systems GmbH, 24143 Kiel (DE)
(72) Erfinder: Buchen, Andreas, Dr., 24226 Heikendorf (DE)
(74) Vertreter: thyssenkrupp Intellectual Property GmbH

(56) Entgegenhaltungen:
- WO-A1-2007/033841
- WO-A2-2005/049418
- DE-B3-102005 031 761
- HACKMAN T: "ELECTRIC PROPULSION FOR SHIPS", SCHIFF UND HAFEN, SEEHAFEN VERLAG GMBH, DE, Bd. 43, Nr. 7, 1. Juli 1991 (1991-07-01), Seiten 44-48, XP000225865, ISSN: 1436-8498

## Beschreibung

Die Erfindung betrifft die elektrische Versorgung eines Wasserfahrzeugs, insbesondere eines Unterseebootes.

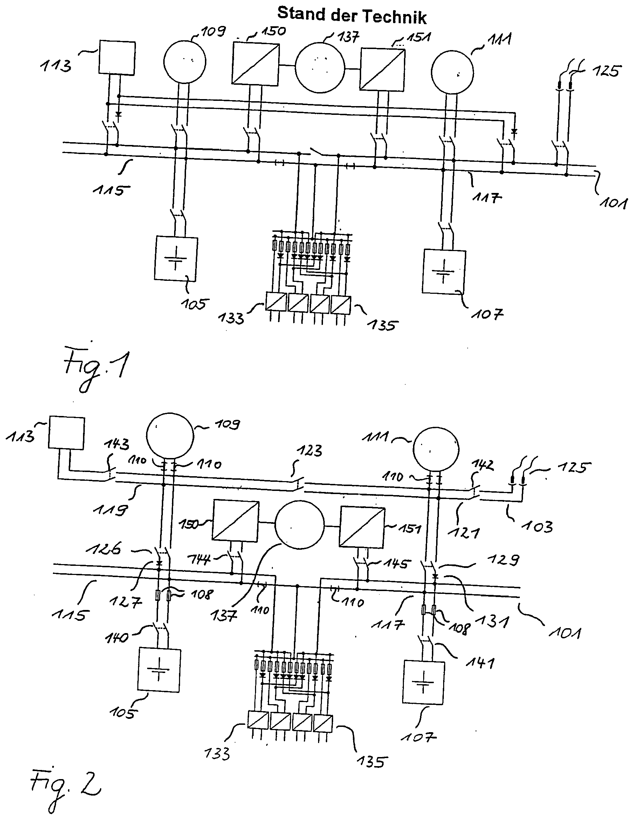

Es zählt zum Stand der Technik, auf konventionell angetriebenen Wasserfahrzeugen, wie beispielsweise auf U-Booten, Bleibatterien als Fahrbatterien einzusetzen. Wie es in Fig. 1 dargestellt ist, wird dabei für eine redundante Auslegung der Fahranlage jeweils die Hälfte der Batterien zu einer Teilbatterie zusammengeschaltet. Jede Teilbatterie ist jeweils über einen Schalter mit einem Teil der Fahranlage verbunden, der jeweils mit einem Generator und einem Teil des Fahrmotors beispielsweise über Schalter verbunden ist. Jeder Teil der Fahranlage ist über Dioden und Schalter mit beispielsweise einer Brennstoffzellenanlage und mehreren Bordnetzumformern verbunden. Im Störungsfall können beide Teile der Fahranlage über einen Kuppelschalter miteinander verbunden werden. Die in Fig. 1 dargestellten Schalter haben darüber hinaus die Aufgabe der betriebsmäßigen Schaltung der Nennströme und der Abschaltung des direkt dahinter liegenden Anlagenteils in einem Kurzschlussfall. Die Schalter der Verbraucher bzw. der Einspeisungen sind zeitselektiv gegenüber den Batterieschaltern.

Der Kuppelschalter wird auf See (off-shore) beispielsweise dann eingelegt, wenn beide Batterien bei Ausfall eines Generators mit einem Generator geladen werden sollen. An Land (on-shore) wird der Kuppelschalter hingegen nur zum Laden mit Landanschluss oder zum Ausgleich der Batterien eingelegt. Der Kuppelschalter kann zeitselektiv gegenüber den Batterieschaltern ausgeführt sein, so dass in einem Kurzschlussfall zunächst beide Teilnetze voneinander getrennt werden, bevor der Batterieleistungsschalter in dem Teil des Fahrnetzes auslöst, in dem der Kurzschluss anliegt. So wird die Auswirkung eines Fehlers nach Auslösen des Kuppelschalters auf einen Teil der Fahranlage beschränkt und der andere Teil der Fahranlage bleibt funktionsfähig.

Nachteilig an der vorstehend beschriebenen Konfiguration mit den in Fig. 1 dargestellten Bleibatterien ist, dass es zu kurzzeitigen Spannungseinbrüchen auf beiden Teilen der Fahranlage kommen kann, wenn der Kuppelschalter eingelegt ist und es zu einem Kurzschluss im Fahrnetz kommt. Die Dauer des Spannungseinbruches bis zur Trennung des defekten Teils des Fahrnetzes von dem intakten Teil durch den Kuppelschalter ist so lange, dass einzelne Bordnetzumformer ausfallen können.

Werden Hochstrombatterien wie beispielsweise Lithium-Ionen-Batterien als Fahrbatterien verwendet, so ergeben sich aufgrund des geringen Innenwiderstandes prospektive Kurzschlussströme, die um ein Vielfaches die Kurzschlussströme von Bleibatterien übersteigen. Für diese prospektiven Kurzschlussströme sind herkömmliche Fahranlagen mechanisch nicht ausgelegt, u.a. weil die verfügbaren Leistungsschalter mit ihrer Stromtragfähigkeit und dem Ausschaltvermögen an ihre physikalischen Grenzen stoßen. Um eine herkömmliche Fahranlage dennoch zu nutzen, können die Teilbatterien über schnelle Sicherungen mit der Fahranlage verbunden werden. Diese Sicherungen reagieren bereits im Millisekundenbereich und schalten den Kurzschluss ab, bevor der maximale Stromwert erreicht wird. Aufgrund dieser schnellen Ansprechzeit ist jedoch keine Zeitselektivität zu den Leistungsschaltern des Fahrmotors, der Generatoren und des Kuppelschalters mehr möglich. Ein Kurzschluss im Generatorausgang oder im Eingang des Fahrmotors führt ferner zur Auslösung der Sicherung und zur Abschaltung einer Batterie. Im Fall eines geschlossenen Kuppelschalters führt ein Kurzschluss in der Fahranlage ferner zur Abschaltung aller zugeschalteten Batterien (Blackout). Es können dabei unzulässige Summenkurzschlussströme auftreten, insbesondere wenn beide Batterien zugeschaltet sind. In diesem Fall darf der Kuppelschalter nicht geschlossen werden. Eine Inbetriebnahme des intakten Teils der Fahranlage ist dabei nur durch manuelles Auswechseln der Sicherungen möglich.

Darüber hinaus besteht die Möglichkeit eines Blackouts auch bei geschlossenem Kuppelschalter, wenn nur eine Batterie zugeschaltet ist. Eine Blackout-Automatik, die automatisch den intakten Teil des Fahrnetzes wieder in Betrieb nimmt, ist aufgrund der Sicherungen, die manuell ausgewechselt werden müssen, nicht möglich. Steht nur ein Generator zur Verfügung, so müssen beide Teilbatterien nacheinander geladen werden, was zu unsymmetrischem Betrieb und zur Verminderung der Fahrleistung des Bootes führt.

Die DE102005031761 B3 offenbart ein konventionelles Design eines Wasserfahrzeugs mit einer Mehrzahl von Energiespeichern.

Die DE 102 37 549 A1 offenbart ein elektrisches Netz für Unter- und O-berwasserfahrzeuge mit einem Hauptnetz zum Versorgen elektrischer Antriebseinheiten mit Energie sowie mit an das Hauptnetz angeschlossen Schiffssicherungsabschnitten.

Die WO 2005/049418 A2 offenbart ein Bordstromversorgungssystem für emissionsarme Wasserfahrzeuge mit wenigstens einem aus einem Gleichstromnetzwerk mit elektrischer Energie versorgbaren Marschfahrtantrieb und mit wenigstens einem aus einem Wechselstromnetzwerk mit elektrischer Energie versorgbaren Zusatzantrieb, wobei das Gleichstrom- und das Wechselstromnetzwerk derart ausgebildet sind, dass eine wechselseitige Energieübergabe zwischen Schiffssicherungsabschnitten erfolgen kann.

Es ist die Aufgabe der Erfindung, ein redundantes und effizientes Energieversorgungskonzept für ein Wasserfahrzeug zu schaffen.

Diese Aufgabe wird gemäß der Erfindung durch die in Anspruch 1 angegebenen Merkmale gelöst. Vorteilhafte Weiterbildungen der Erfindung sind in den Unteransprüchen, der nachfolgenden Beschreibung und der Zeichnungen angegeben.

Der Erfindung liegt die Erkenntnis zugrunde, dass ein redundantes Energieversorgungskonzept unter Verwendung von zwei Verteilungsebenen realisiert werden kann, wobei eine erste Verteilungsebene für den Anschluss eines Energiespeichers oder einer Mehrzahl von Energiespeichern vorgesehen ist und wobei eine zweite Verteilungsebene für den Anschluss beispielsweise eines Generators oder einer Mehrzahl von Generatoren vorgesehen ist. Durch eine geeignete Kopplung beider Verteilungsebenen unter Verwendung von beispielsweise Schaltern und/oder Dioden kann eine selektive Zu- oder Abschaltung des Generators oder des jeweiligen Energiespeichers durchgeführt werden, so dass im Kurzschlussfall der betroffene Energiespeicher abgeschaltet wird oder bei Ausfall eines Generators beide Energiespeicher gleichzeitig mittels desselben Generators mit Energie versorgt werden können.

Durch die Verwendung der zusätzlichen Verteilungsebene kann der Kuppelschalter zwischen den Fahrnetzschienen (die erste Verteilungsebene) entfallen, wobei die zusätzliche, zweite Verteilungsebene über Dioden und/oder Schalter an beide Fahrnetzschienen angebunden ist. Die zusätzliche Verteilungsebene kann beispielsweise zweigeteilt sein, wobei beide Teile beispielsweise über einen Schalter miteinander verbindbar sein können. Werden mehrere Generatoren eingesetzt, so kann jeder Teil der zweiten Verteilungsebene einem Generator zugeordnet werden, der beispielsweise über Trennlaschen oder Schalter an die zweite Verteilungsebene angebunden sein kann. Darüber hinaus kann die zweite Verteilungsebene für die Anbindung einer Brennstoffzellenanlage oder für eine Ladeeinrichtung vorgesehen sein, wobei die Brennstoffzellenanlage oder die Ladeeinrichtung jeweils mit einem Teil der zweiten, zusätzlichen Verteilungsebene über Schalter verbindbar sind.

Ein wesentlicher Vorteil der erfindungsgemäßen Lösung besteht darin, dass bei allen betrachteten Betriebsvarianten ein redundantes Fahrnetz bereitgestellt wird. Durch die Verwendung der zusätzlichen Verteilungsebene und den Verzicht auf den Kuppelschalter zwischen den Fahrnetzschienen der ersten Verteilungsebene können die Batterien nicht mehr parallel geschaltet werden, so dass die Gefahr eines Blackouts im Kurzschlussfall nicht besteht. Darüber hinaus ist es möglich, mit einem einzigen Generator oder einer einzigen Brennstoffzellenanlage oder einem Ladeanschluss gleichzeitig mehrere Batterien zu laden. Ist die zweite Verteilungsebene über Dioden angebunden, so besteht auch in diesem Fall eine Redundanz der Fahranlage. Denn selbst bei einem Ausfall der Dioden kann die Redundanz der Fahranlage erhalten bleiben, wenn die Batterien nacheinander geladen werden. Darüber hinaus führt ein Kurzschluss in der zweiten Verteilungsebene z. B. an einem Ausgang eines Generators aufgrund der Dioden nicht mehr zum Abschalten der Batterien. Wird die Brennstoffzellenanlage oder die Ladeeinrichtung über einen Schalter angebunden, so kann der jeweilige Schalter kostengünstig als Leerschalter ausgeführt sein.

Gemäß der Erfindung ist das Wasserfahrzeug mit einem ersten Energiespeicher, einem zweiten Energiespeicher, einer Energiebereitstellungseinrichtung, einer ersten Verteilungsebene und einer zweiten Verteilungsebene ausgestattet, wobei die erste Verteilungsebene beispielsweise Fahrnetzschienen umfasst und die zweite Verteilungsebene eine zusätzliche Verteilungsebene ist.

Gemäß der Erfindung umfasst die erste Verteilungsebene ein erstes Teilversorgungsnetz bzw. eine erste Fahrschiene und ein zweites Teilversorgungsnetz bzw. eine zweite Fahrschiene, wobei der erste Energiespeicher mit dem ersten Teilversorgungsnetz elektrisch verbindbar ist und wobei der zweite Energiespeicher mit dem zweiten Teilversorgungsnetz elektrisch verbindbar ist. Die Energiebereitstellungseinrichtung ist hingegen mit der zweiten Verteilungsebene und mit dem ersten Teilversorgungsnetz und/oder mit dem Teilversorgungsnetz zum Versorgen des ersten Energiespeichers und/oder des zweiten Energiespeichers mit Energie elektrisch verbindbar. Auf diese Weise können die beiden Energiespeicher unter Verwendung derselben Energiebereitstellungseinrichtung geladen werden. Ferner kann der jeweilige Energiespeicher im Kurzschlussfall vom Netz genommen werden, wodurch die Sicherheit und die Redundanz der Fahranlage erhöht werden.

Die zweite Verteilungsebene kann ferner ein erstes Teilverteilungsnetz und ein zweites Teilverteilungsnetz aufweisen, die mittels eines Schalters und/oder einer Diode miteinander verbunden sind. Erfindungsgemäß sind das erste Teilverteilungsnetz der ersten Verteilungsebene und das erste Teilverteilungsnetz der zweiten Verteilungsebene miteinander elektrisch verbindbar. Ferner sind das zweite Teilverteilungsnetz der ersten Verteilungsebene und das zweite Teilverteilungsnetz der zweiten Verteilungsebene miteinander elektrisch verbindbar. Dadurch wird eine einfache und flexible Systemarchitektur geschaffen.

Gemäß einer Weiterbildung der Erfindung umfasst das Wasserfahrzeug eine weitere Energiebereitstellungseinrichtung, die mit der zweiten Verteilungsebene elektrisch verbindbar ist. Gemäß einer Ausführungsform sind die (erste) Energiebereitstellungseinrichtung mit dem ersten Teilverteilungsnetz der zweiten Verteilungsebene und die weitere Energiebereitstellungseinrichtung mit dem zweiten Teilverteilungsnetz der zweiten Verteilungsebene verbindbar. Somit sind beide Energiebereitstellungseinrichtungen unterschiedlichen Teilverteilungsnetzen derselben Verteilungsebene zugeordnet und können, falls die Teilverteilungsnetze miteinander über einen Schalter oder eine Diode koppelbar sind, zeit- und/oder richtungsselektiv zu- oder abgeschaltet werden.

Erfindungsgemäß umfasst das Wasserfahrzeug einen bevorzugt elektrischen Antriebsmotor, der bevorzugt aus zwei Teilmotoren gebildet ist, wobei bevorzugt der eine Teilmotor mit dem Teilverteilungsnetz der ersten Verteilungsebene und der andere Teilmotor mit dem zweiten Teilverteilungsnetz der ersten Verteilungsebene elektrisch verbindbar ist. Das erste und das zweite Teilverteilungsnetz der ersten Verteilungsebene können ferner für unterschiedliche Bordnetze oder Bordnetzumformer oder Wechselrichter vorgesehen werden, wodurch eine zusätzliche Redundanz geschaffen wird.

Gemäß einer Weiterbildung der Erfindung umfasst die zweite Verteilungsebene einen Anschlussbereich mit nach außen geführten Kontakten zum Anschließen eines elektrischen Elementes, beispielsweise einer weiteren Energiebereitstellungseinrichtung, wobei der Anschlussbereich ein Ladeanschlussbereich sein kann. Dadurch kann beispielsweise an Land eine Ladeeinrichtung zum Aufladen der Energiespeicher eingesetzt werden.

Die Energiebereitstellungseinrichtungen können jeweils ein Generator oder eine Brennstoffzelle oder eine Ladeeinrichtung sein. Die Energiebereitstellungseinrichtungen können ferner gleich oder unterschiedlich sein, so dass die erste Energiebereitstellungseinrichtung eine Brennstoffzelle und die zweite Energiebereitstellungseinrichtung ein Generator sein können. Die erste und die zweite Energiebereitstellungseinrichtung können ferner Generatoren sein. Typischerweise werden bei einem Unterseeboot im Tauchbetrieb die Brennstoffzelle, bei Überwasserfahrt oder Fahrt in Schnorcheltiefe ein von einem Dieselmotor betriebener Generator und im Hafen eine stationäre Ladeeinrichtung als Energiebreitstellungseinrichtung verwendet.

Vorteilhaft umfasst das Wasserfahrzeug eine Mehrzahl von Energiebereitstellungseinrichtungen der vorgenannten Art, so dass gleichzeitig mehrere Generatoren und beispielsweise eine Brennstoffzelle an die zweite Verteilungsebene elektrisch anschließbar sind. Hierzu kann die zweite Verteilungsebene eine Mehrzahl von Teilverteilungsnetzen aufweisen, die jeweils in Serie unter Verwendung von Schaltern und/oder Dioden elektrisch verbindbar sind. Jedem Teilverteilungsnetz kann somit eine Energiebereitstellungseinrichtung der vorgenannten Art zugeordnet werden, wobei die elektrischen Verbindungen der Mehrzahl der Teilverteilungsnetze mit der ersten Verteilungsebene jeweils unter Verwendung von Schaltern und/oder Dioden realisiert werden können.

Die Erfindung findet vorteilhaft Anwendung bei einem Unterseeboot, kann jedoch auch bei anderen Wasserfahrzeugen eingesetzt werden.

Die Erfindung ist nachfolgend anhand eines in der Zeichnung dargestellten Ausführungsbeispiels erläutert. Es zeigen:
- Fig. 1: eine Fahranlage eines Unterseeboots nach dem Stand der Technik,
- Fig. 2: in entsprechender Darstellung gemäß Fig. 1 eine Fahranlage gemäß der Erfindung und
- Fig. 3: eine weitere Fahranlage gemäß der Erfindung.

Die anhand von Fig. 1 beschriebene Fahranlage nach dem Stand der Technik ist im Einzelnen weiter oben in der Beschreibungseinleitung beschrieben. Die in Fig. 1 dargestellten Komponenten der Fahranlage nach dem Stand der Technik entsprechen den Komponenten der anhand von Fig. 2 dargestellten Fahranlage gemäß der Erfindung, es sind daher insoweit in Fig. 1 entsprechende Bezugsziffern eingefügt worden.

Fig. 2 zeigt ein Blockdiagramm einer Fahranlage mit einer ersten Verteilungsebene 101, einer zweiten Verteilungsebene 103, einem ersten Energiespeicher 105, einem zweiten Energiespeicher 107, einem ersten Generator 109, einem zweiten Generator 111 sowie einer Brennstoffzellenanlage 113.

Der erste Energiespeicher 105 ist über einen Schalter 140 und beispielsweise Sicherungen 108 mit einem ersten Teilverteilungsnetz 115 verbunden. Der zweite Energiespeicher 107 ist beispielsweise über einen Schalter 141 und Sicherungen 108 mit einem zweiten Teilverteilungsnetz 117 verbunden. Der erste und der zweite Energiespeicher 105, 107 sind aus Lithium-Ionen-Zellen aufgebaute Teilbatterien.

Der erste Generator 109 ist mit einem ersten Teilverteilungsnetz 119 der zweiten Verteilungsebene 103 verbunden. Analog ist der zweite Generator 111 mit einem zweiten Teilverteilungsnetz 121 der zweiten Verteilungsebene 103 verbunden. Zwischen dem ersten Teilverteilungsnetz 119 und dem zweiten Teilverteilungsnetz 121 ist ein Kuppelschalter 123 angeordnet. Die zweite Verteilungsebene 103 umfasst ferner Ladeanschlüsse 125, die mit dem zweiten Teilverteilungsnetz 121 über einen Schalter 142 elektrisch verbindbar sind. Die Brennstoffzelle 113 ist mit dem ersten Teilverteilungsnetz 119 ebenfalls über einen Schalter 143 elektrisch verbindbar.

Das erste Teilverteilungsnetz 119 der zweiten Verteilungsebene 103 ist mit dem ersten Teilverteilungsnetz 115 der ersten Verteilungsebene 101 über einen Schalter 126 elektrisch gekoppelt, wobei einem Teilschalter des Schalters 126 eine Diode 127 nachgeschaltet ist. Analog ist das zweite Teilverteilungsnetz 121 der zweiten Verteilungsebene 103 mit dem zweiten Teilverteilungsnetz 117 der ersten Verteilungsebene 101 über einen Schalter 129 gekoppelt, wobei einem Teilschalter des Schalters 129 eine Diode 131 nachgeschaltet ist.

Wie in Fig. 2 dargestellt sind die erste und die zweite Verteilungsebene 101 und 103 sowie die diese Ebenen verbindenden Verbindungsabschnitte mit den Schaltern 126 und 129 beispielsweise als Doppelleitungen ausgebildet, wobei eine der Leitungen jeweils für das positive und die andere jeweils für das negative Potenzial oder für das Massepotenzial vorgesehen sind. Somit sind die Schalter 126 und 129 bevorzugt als Doppelschalter mit jeweils einem ersten und einem zweiten Teilschalter ausgebildet, wobei die Teilschalter der jeweiligen Leitungen zugeordnet sind.

Das erste Teilverteilungsnetz 115 der ersten Verteilungsebene 101 ist bevorzugt einem ersten Bordnetz mit einer Mehrzahl von Bordnetzumformern und/oder Wechselrichtern 133 zugeordnet. Analog ist das zweite Teilverteilungsnetz 117 der ersten Verteilungsebene einem zweiten Bordnetz mit einer Mehrzahl von Umformern bzw. Wechselrichtern 135 zugeordnet.

Das Wasserfahrzeug umfasst ferner einen Antriebsmotor 137, der ein Elektromotor, beispielsweise ein PM-Motor sein kann. Der Antriebsmotor 137 besteht aus zwei Teilmotoren, von denen der eine mit dem ersten Teilverteilungsnetz 115 der ersten Verteilungsebene 101 über Inverter 150 und einen Schalter 144 gekoppelt ist. Der andere Teilmotor des Antriebsmotors 137 ist mit dem zweiten Teilverteilungsnetz 117 der ersten Verteilungsebene 101 über Inverter 151 und einen Schalter 145 gekoppelt. Die Anzahl der Inverter ist jeweils optional.

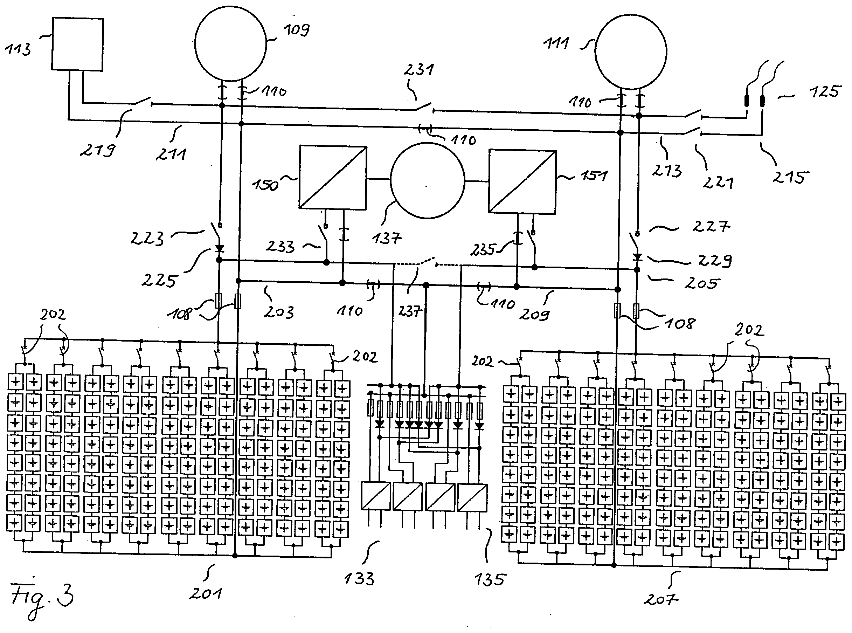

Fig. 3 zeigt ein Blockdiagramm eines Antriebsnetzwerks, bei dem im Unterschied zu dem in Fig. 2 dargestellten Ausführungsbeispiel Leerschalter vorgesehen sind.

Ein erster Energiespeicher 201 ist über beispielsweise Sicherungen 108 mit einem ersten Teilverteilungsnetz 203 einer ersten Verteilungsebene 205 verbunden. Ein zweiter Energiespeicher 207 ist analog mit einem zweiten Teilverteilungsnetz 209 der ersten Verteilungsebene 205 über beispielsweise Sicherungen 108 verbunden. Der Elektromotor 137 ist in Analogie zu dem in Fig. 2 dargestellten Ausführungsbeispiel mit der ersten Verteilungsebene 205 verbunden.

Der Generator 109 ist mit einem ersten Teilverteilungsnetz 211 einer zweiten Verteilungsebene 215 verbunden. Der zweite Generator 111 ist mit einem zweiten Teilverteilungsnetz 213 einer zweiten Verteilungsebene 215 verbunden. In Analogie zu dem in Fig. 1 dargestellten Ausführungsbeispiel ist die Brennstoffzellenanlage 113 mit dem ersten Teilverteilungsnetz 211 verbunden. Die zweite Verteilungsebene 215 umfasst ferner Ladeanschlüsse 125. Die Anordnung und die Verschaltung der in Fig. 3 dargestellten Elemente entspricht im Wesentlichen der Anordnung und der Verschaltung der Elemente in Fig. 2.

Die Brennstoffzellenanlage 113 ist über einen Leerschalter 219 mit dem ersten Teilverteilungsnetz 211 der zweiten Verteilungsebene 215 verbunden. Der Leerschalter 219 umfasst ein Schaltelement, das bevorzugt nur einer Leitung der beiden Leitungen zugeordnet ist, während die andere Leitung mit dem korrespondierenden Leitungsstück des ersten Teilverteilungsnetzes 211 dauerhaft verbunden ist. Die Ladeanschlüsse 125 können ferner über einen Leerschalter 221 mit dem zweiten Teilverteilungsnetz 213 verbunden sein, wobei der Leerschalter 221 beispielsweise zwei Schaltelemente aufweist, die jeder der Teilleitungen zugeordnet sind.

Das erste Teilverteilungsnetz 211 der zweiten Verteilungsebene 215 ist mit dem ersten Teilverteilungsnetz 203 der ersten Verteilungsebene 205 über einen Schalter 223 und eine Diode 225 gekoppelt. Der Schalter 223 umfasst bevorzugt ein Schaltelement, das nur einer der Leitungen zugeordnet ist und beispielsweise für mehrere Tausend Ampere ausgelegt ist, während die andere Leitung mit dem korrespondierenden Leitungsstück des ersten Teilverteilungsnetzes 203 elektrisch dauerhaft verbunden ist. So ist die Diode 225 beispielsweise dem Schaltelement des Schalters 223 nachgeschaltet. In Analogie hierzu ist das zweite Teilverteilungsnetz 213 der zweiten Verteilungsebene 215 über einen Schalter 227, dessen Schaltelement ebenfalls für beispielsweise mehrere Tausend Ampere ausgelegt sein kann, und eine Diode 229 mit dem zweiten Teilverteilungsnetz 209 der ersten Verteilungsebene 205 gekoppelt.

Zwischen dem ersten Teilverteilungsnetz 211 und dem zweiten Teilverteilungsnetz 213 der zweiten Verteilungsebene 215 ist ferner ein Kuppelschalter 231 in Form eines Leerschalters angeordnet. Der Kuppelschalter 231 umfasst beispielsweise ein Schaltelement, das für eine der Leitungen der Verteilungsebene zugeordnet ist, während die andere Leitung der Verteilungsebene entweder durchgehend ist oder eine Trennlasche 110 aufweist.

Die Schalter 233 und 235, die jeweils für mehrere Tausend Ampere ausgelegt sein können, sind vorgesehen, um den Antriebsmotor 137 jeweils über beispielsweise sechs Inverter 150 und 151 mit dem ersten Teilverteilungsnetz 203 und dem zweiten Teilverteilungsnetz 209 zu verbinden. Die Anzahl der Inverter ist jeweils optional.

Zwischen dem ersten Teilverteilungsnetz 203 und dem zweiten Teilverteilungsnetz 209 der ersten Verteilungsebene 205 ist ferner eine Notkupplung 237 beispielsweise als Schalter angeordnet. Die Notkupplung 237 verbindet schaltbar die dasselbe Potenzial übertragenden Leitungsstücke des ersten Teilverteilungsnetzes 203 und des zweiten Teilversorgungsnetzes 209 während die das jeweils andere Potenzial übertragenden Leitungsstücke über Trennlaschen 110 oder Brücken miteinander verbunden sind. Die Notkupplung 237 darf nur dann eingelegt werden, wenn nur eine Teilbatterie betrieben wird.

Die Energiespeicher 201 und 207 sind Batterieanordnungen mit jeweils 18 Strängen mit jeweils 8 Modulen und 23 Zellen. Die jeweiligen Stränge des jeweiligen Energiespeichers 201 bzw. 207 sind jeweils unabhängig voneinander über Strangschalter 202 zuschaltbar.

Die Sicherungen 108 greifen um einen prospektiven Kurzschlussstrom abzufangen. Das wasserfahrzeugeigene Netzwerk, beispielsweise ein IT-Netz, ist bevorzugt derart angeordnet, dass dessen beide Pole gegenüber Masse isoliert sind. Für die Kurzschlussabschaltung eines IT-Netzes müssen in beiden Polen Schutzorgane vorgesehen werden, wie z.B. die Sicherungen 108. Da die Sicherungen 108 den Kurzschluss zentral abschalten, braucht dies nicht mehr durch den Schalter 233 vorgenommen zu werden, der dann einphasig ausgelegt werden kann.

Das erfindungsgemäße Fahranlagenkonzept für Wasserfahrzeuge umfasst somit zwei Verteilungsebenen. Die erste Ebene, die Fahrnetzebene, ist zweigeteilt und verfügt bevorzugt nicht über eine Kuppeleinrichtung. Die zweite Ebene ist zweigeteilt und verfügt über eine Kuppeleinrichtung, um beide Teile miteinander zu verbinden. Je ein Teil der zweiten Ebene ist beispielsweise über Schalter mit je einem Teil der ersten Ebene verbunden. Jedem Teilverteilungsnetz in der ersten Ebene sind mindestens ein Energiespeicher und mindestens ein Teil des Antriebsmotors zugeordnet. Jedem Teilverteilungsnetz in der ersten Ebene ist ferner beispielsweise mindestens ein Bordnetzumformer zugeordnet, der über eine Richtung sperrende Bauelemente an beide Versorgungsnetze angeschlossen ist. Jedem Teilverteilungsnetz in der zweiten Ebene ist ferner beispielsweise ein Generator zugeordnet, wobei jedem Teilverteilungsnetz in der zweiten Ebene weitere Einrichtung zur Energieeinspeisung sowie beispielsweise Landladeanschlüsse oder außenluftunabhängige Energieerzeugungssysteme zugeordnet werden. Ferner kann je ein Teil der zweiten Ebene über Schalter und in eine Richtung sperrende Bauelemente wie Dioden, mit je einem Teil der ersten Ebene verbunden sein.

### Bezugszeichenliste

- 101: - Erste Verteilungsebene
- 103: - Zweite Verteilungsebene
- 105: - Erster Energiespeicher
- 107: - Zweiter Energiespeicher
- 108: - Sicherungen
- 109: - Erster Generator
- 110: - Trennlaschen
- 111: - Zweiter Generator
- 113: - Brennstoffzellenanlage
- 115: - Erstes Teilverteilungsnetz
- 117: - Zweites Teilverteilungsnetz
- 119: - Erstes Teilverteilungsnetz
- 121: - Zweites Teilverteilungsnetz
- 123: - Kuppelschalter
- 125: - Ladeanschlüsse
- 126: - Schalter
- 127: - Diode
- 129: - Schalter
- 131: - Diode
- 133: - Wechselrichter
- 135: - Wechselrichter
- 137: - Antriebsmotor
- 140: - Schalter
- 141: - Schalter
- 142: - Schalter
- 143: - Schalter
- 144: - Schalter
- 145: - Schalter
- 150: - Inverter
- 201: - Erster Energiespeicher
- 202: - Strangschalter
- 203: - Erstes Teilverteilungsnetz
- 205: - Erste Verteilungsebene
- 207: - Zweiter Energiespeicher
- 209: - Zweites Teilverteilungsnetz
- 211: - Erstes Teilverteilungsnetz
- 213: - Zweites Teilverteilungsnetz
- 215: - Zweite Teilverteilungsebene
- 219: - Leerschalter
- 221: - Leerschalter
- 223: - Schalter
- 225: - Diode
- 227: - Schalter
- 229: - Diode
- 231: - Kuppelschalter
- 233: - Schalter
- 235: - Schalter
- 237: - Notkupplung

## Patentansprüche

1. Wasserfahrzeug, mit:
einem ersten Energiespeicher (105);
einem zweiten Energiespeicher (107);
einer Energiebereitstellungseinrichtung (109);
einer ersten Verteilungsebene (101), bestehend aus Fahrnetzschienen (101, 117, 115) und einen an diese über mindestens einen Schalter (144, 145) und einen Inverter (150, 151) angeschlossenen Antriebsmotor (137);
einer zweite Verteilungsebene (103), bestehend aus elektrischen Leitungen;
wobei die erste Verteilungsebene (101) ein erstes Teilverteilungsnetz aus einem ersten Teil von Fahrnetzschienen (115) und ein zweites Teilverteilungsnetz (117) aus einem zweiten Teil von Fahrnetzschienen aufweist und wobei an die erste Verteilungsebene (101) der erste und der zweite Energiespeicher (105, 107) angeschlossen sind und wobei der erste Energiespeicher (105) mit dem ersten Teilverteilungsnetz (115) elektrisch über einen zweiten Schalter (140) verbunden ist und wobei der zweite Energiespeicher (107) mit dem zweiten Teilverteilungsnetz (117) elektrisch über einen dritten Schalter (141) verbunden ist und
wobei die zweite Verteilungsebene (103) ein erstes Teilverteilungsnetz (119) und ein zweites Teilverteilungsnetz (121) aufweist, die über einen Kuppelschalter (123) elektrisch verbunden sind;
wobei an die zweite Verteilungsebene (103) die Energiebereitstellungseinrichtung (109) angeschlossen ist und die zweite Verteilungsebene (103) mittels vierten und fünften Schaltern (126, 129) und/oder Dioden (127, 131) mit der ersten Verteilungsebene (101) koppelbar ist,
wobei das erste Teilverteilungsnetz (119) der ersten Verteilungsebene (101) elektrisch mit dem ersten Teilverteilungsnetz (119) der zweiten Verteilungsebene (103) über einen vierten Schalter (126) verbunden werden kann,
und das zweite Teilverteilungsnetz (117) der ersten Verteilungsebene (101), mit dem zweiten Teilverteilungsnetz (121) der zweiten Verteilungsebene (103) elektrisch über einen fünften Schalter (129) verbunden werden kann;
wobei die Energiebereitstellungseinrichtung (109) mit dem ersten Teilverteilungsnetz (119) der zweiten Verteilungsebene (103) und mit dem ersten Teilverteilungsnetz (115) der ersten Verteilungsebene (101) oder über den Kuppelschalter (123) und über das zweite Teilverteilungsnetz (121) der zweiten Verteilungsebene (103) mit dem zweiten Teilverteilungsnetz (117) der ersten Verteilungsebene (101) verbunden ist und nach Herstellen der jeweiligen Verbindung den verbundenen Energiespeicher (105, 107) mit Energie elektrisch versorgt.

2. Wasserfahrzeug gemäß Anspruch 1, das ferner eine weitere Energiebereitstellungseinrichtung (111) aufweist, wobei die Energiebereitstellungseinrichtung (109) mit dem ersten Teilverteilungsnetz (119) der zweiten Verteilungsebene (103) und die weitere Energiebereitstellungseinrichtung (111) mit dem zweiten Teilverteilungsnetz (121) der zweiten Verteilungsebene (103) elektrisch verbindbar sind.

3. Wasserfahrzeug gemäß einem der Ansprüche 1 bis 2, das einen Antriebsmotor (137) aufweist, der mit dem ersten Teilverteilungsnetz (115) der ersten Verteilungsebene (101) und dem zweiten Teilverteilungsnetz (117) der ersten Verteilungsebene (101) elektrisch verbindbar ist.

4. Wasserfahrzeug gemäß einem der Ansprüche 1 bis 3, wobei das erste Teilverteilungsnetz (115) der ersten Verteilungsebene (101) und das zweite Teilverteilungsnetz (117) der ersten Verteilungsebene (101) für unterschiedliche Bordnetze oder Bordnetzumformer oder Wechselrichter vorgesehen sind.

5. Wasserfahrzeug gemäß einem der Ansprüche 1 bis 4, wobei die zweite Verteilungsebene (103) einen Ladeanschlussbereich (125) zum Anschließen eines elektrischen Elementes aufweist.

6. Wasserfahrzeug gemäß einem der Ansprüche 1 bis 5, wobei die Energiebereitstellungseinrichtung (109) ein Generator oder eine Brennstoffzelle oder eine Batterieladeeinrichtung ist.

7. Wasserfahrzeug gemäß einem der Ansprüche 1 bis 6, wobei die zweite Verteilungsebene (103) eine Mehrzahl von separaten Teilverteilungsnetzen aufweist, die jeweils in Serie elektrisch insbesondere über weitere Schalter verbindbar sind.

8. Wasserfahrzeug gemäß Anspruch 7 wobei die Mehrzahl der Teilverteilungsnetze mittels weiteren Schaltern oder weiteren Dioden mit der ersten Verteilungsebene (101) verbunden ist.

9. Wasserfahrzeug gemäß einem der Ansprüche 1 bis 8, das ein Unterwasserboot ist.

## Claims

1. Water vehicle comprising:
a first energy store (105);
a second energy store (107);
an energy provision device (109);
a first distribution level (101) comprising propulsion network busbars (101, 117, 115) and a drive motor (137) which is connected to the said propulsion network busbars via at least one switch (144, 145) and one inverter (150, 151);
a second distribution level (103) comprising electrical lines;
wherein the first distribution level (101) comprises a first partial distribution network comprising a first portion of propulsion network busbars (115) and a second partial distribution network (117) comprising a second portion of propulsion network busbars, and wherein the first and the second energy store (105, 107) are connected to the first distribution level (101), and wherein the first energy store (105) is electrically connected to the first partial distribution network (115) via a second switch (140) and wherein the second energy store (107) is electrically connected to the second partial distribution network (117) via a third switch (141), and
wherein the second distribution level (103) comprises a first partial distribution network (119) and a second partial distribution network (121) which are electrically connected via a coupling switch (123);
wherein the energy provision device (109) is connected to the second distribution level (103) and the second distribution level (103) can be coupled to the first distribution level (101) by means of fourth and fifth switches (126, 129) and/or diodes (127, 131),
wherein the first partial distribution network (119) of the first distribution level (101) can be electrically connected to the first partial distribution network (119) of the second distribution level (103) via a fourth switch (126), and
the second partial distribution network (117) of the first distribution level (101) can be electrically connected to the second partial distribution network (121) of the second distribution level (103) via a fifth switch (129);
wherein the energy provision device (109) is connected to the first partial distribution network (119) of the second distribution level (103) and to the first partial distribution network (115) of the first distribution level (101), or to the second partial distribution network (117) of the first distribution level (101) via the coupling switch (123) and via the second partial distribution network (121) of the second distribution level (103), and supplies electrical energy to the connected energy store (105, 107) after the respective connection is established.

2. Water vehicle according to Claim 1, which also comprises a further energy provision device (111), wherein the energy provision device (109) can be electrically connected to the first partial distribution network (119) of the second distribution level (103) and the further energy provision device (111) can be electrically connected to the second partial distribution network (121) of the second distribution level (103).

3. Water vehicle according to either of Claims 1 and 2, which comprises a drive motor (137) which can be electrically connected to the first partial distribution network (115) of the first distribution level (101) and to the second partial distribution network (117) of the first distribution level (101).

4. Water vehicle according to one of Claims 1 to 3, wherein the first partial distribution network (115) of the first distribution level (101) and the second partial distribution network (117) of the first distribution level (101) are provided for different on-board electrical systems or on-board electrical system converters or inverters.

5. Water vehicle according to one of Claims 1 to 4, wherein the second distribution level (103) comprises a charging connection region (125) for connection of an electrical element.

6. Water vehicle according to one of Claims 1 to 5, wherein the energy provision device (109) is a generator or a fuel cell or a battery charging device.

7. Water vehicle according to one of Claims 1 to 6, wherein the second distribution level (103) comprises a plurality of separate partial distribution networks which can each be electrically connected in series, in particular via further switches.

8. Water vehicle according to Claim 7, wherein the plurality of partial distribution networks are connected to the first distribution level (101) by means of further switches or further diodes.

9. Water vehicle according to one of Claims 1 to 8, which is a submarine.

## Revendications

1. Véhicule nautique comprenant :
un premier accumulateur d'énergie (105) ;
un deuxième accumulateur d'énergie (107) ;
un dispositif d'alimentation d'énergie (109) ;
un premier niveau de distribution (101) comprenant des rails de réseau de propulsion (101, 117, 115) et un moteur d'entraînement (137) relié à ceux-ci par le biais d'au moins un commutateur (144, 145) et un inverseur (150, 151) ;
un deuxième niveau de distribution (103) comprenant des fils électriques ;
le premier niveau de distribution (101) comportant un premier sous-réseau de distribution muni d'une première partie de rails de réseau de propulsion (115) et un deuxième sous-réseau de distribution (117) muni d'une deuxième partie de rails de réseau de propulsion, et les premier et deuxième accumulateurs d'énergie (105, 107) étant raccordés au premier niveau de distribution (101) et le premier accumulateur d'énergie (105) étant raccordé électriquement au premier sous-réseau de distribution (115) par le biais d'un deuxième commutateur (140) et le deuxième accumulateur d'énergie (107) étant raccordé électriquement au deuxième sous-réseau de distribution (117) par le biais d'un troisième commutateur (141) et
le deuxième niveau de distribution (103) comportant un premier sous-réseau de distribution (119) et un deuxième sous-réseau de distribution (121) qui sont raccordés électriquement par le biais d'un commutateur de couplage (123) ;
le dispositif d'alimentation d'énergie (109) étant raccordé au deuxième niveau de distribution (103) et le deuxième niveau de distribution (103) pouvant être couplé au premier niveau de distribution (101) à l'aide de quatrième et cinquième commutateurs (126, 129) et/ou diodes (127, 131) ;
le sous-réseau de distribution (119) du premier niveau de distribution (101) pouvant être raccordé électriquement au premier sous-réseau de distribution (119) du deuxième niveau de distribution (103) par le biais d'un quatrième commutateur (126),
et le deuxième sous-réseau de distribution (117) du premier niveau de distribution (101) pouvant être raccordé électriquement au deuxième sous-réseau de distribution (121) du deuxième niveau de distribution (103) par le biais d'un cinquième commutateur (129) ;
le dispositif d'alimentation en énergie (109) étant raccordé au premier sous-réseau de distribution (119) du deuxième niveau de distribution (103) et au premier sous-réseau de distribution (115) du premier niveau de distribution (101) ou, par le biais du commutateur de couplage (123) et par le biais du deuxième sous-réseau de distribution (121) du deuxième niveau de distribution (103), au deuxième sous-réseau de distribution (117) du premier niveau de distribution (101) et alimentant en énergie électrique l'accumulateur d'énergie raccordé (105, 107) après établissement du raccordement respectif.

2. Véhicule nautique selon la revendication 1, comprenant en outre un autre dispositif d'alimentation en énergie (111), le dispositif d'alimentation en énergie (109) pouvant être raccordé électriquement au premier sous-réseau de distribution (119) du deuxième niveau de distribution (103) et l'autre dispositif d'alimentation en énergie (111) pouvant être raccordé électriquement au deuxième sous-réseau de distribution (121) du deuxième niveau de distribution (103).

3. Véhicule nautique selon l'une des revendications 1 à 2, comprenant un moteur d'entraînement (137) qui peut être raccordé électriquement au premier sous-réseau de distribution (115) du premier niveau de distribution (101) et au deuxième sous-réseau de distribution (117) du premier niveau de distribution (101).

4. Véhicule nautique selon l'une des revendications 1 à 3, le premier sous-réseau de distribution (115) du premier niveau de distribution (101) et le deuxième sous-réseau de distribution (117) du premier niveau de distribution (101) étant prévus pour différents réseaux de bord ou convertisseurs ou onduleurs de réseau de bord.

5. Véhicule nautique selon l'une des revendications 1 à 4, le deuxième niveau de distribution (103) comportant une zone de raccordement de charge (125) destinée au raccordement d'un élément électrique.

6. Véhicule nautique selon l'une des revendications 1 à 5, le dispositif d'alimentation en énergie (109) étant un générateur ou une pile à combustible ou un dispositif de charge de batterie.

7. Véhicule nautique selon l'une des revendications 1 à 6, le deuxième niveau de distribution (103) comprenant une pluralité de sous-réseaux de distribution distincts qui peuvent chacun être raccordés électriquement en série, en particulier par le biais d'autres commutateurs.

8. Véhicule nautique selon la revendication 7, la pluralité de sous-réseaux de distribution étant raccordée au premier niveau de distribution (101) à l'aide d'autres commutateurs ou d'autres diodes.

9. Véhicule nautique selon l'une des revendications 1 à 8, ledit véhicule nautique étant un sous-marin.
